Europäisches Patentamt

European Patent Office

Office européen des brevets

(19)

(11) Publication number: **0 083 739**
**B1**

# (12) EUROPEAN PATENT SPECIFICATION

(45) Date of publication of patent specification: **07.08.85**

(51) Int. Cl.⁴: **A 47 L 15/42**

(21) Application number: **82111374.3**

(22) Date of filing: **08.12.82**

(54) Dishwasher incorporating an electro-chemical cell.

(30) Priority: **14.12.81 IT 4573981**

(43) Date of publication of application:
**20.07.83 Bulletin 83/29**

(45) Publication of the grant of the patent:
**07.08.85 Bulletin 85/32**

(84) Designated Contracting States:
**AT BE CH DE FR GB IT LI NL SE**

(56) References cited:
**EP-A-0 002 423**
**EP-A-0 031 308**
**DE-A-2 947 410**
**DE-A-3 015 728**
**GB-A-2 063 658**

(73) Proprietor: **INDUSTRIE ZANUSSI S.p.A.**
**Via Giardini Cattaneo 3**
**I-33170 Pordenone (IT)**

(72) Inventor: **Bianchi, Giuseppe**
**Piazza Libia 1**
**I-20135 Milano (IT)**
Inventor: **Milocco, Claudio**
**Via Piero Gobetti 4**
**I-33170 Pordenone (IT)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

# Description

This invention relates to a dishwashing machine, particularly for domestic use, comprising an electrochemical cell adapted to generate an oxidizing substance for completing the cleaning of the dishes and the like by disinfecting them and eliminating any disagreeable odors.

Known already (See EP—A—0031308) are dishwashers, in which a salt container is adapted to supply a brine not only to a decalcifyer for softening the tap water, but also to an electrochemical cell operable to generate, by electrolysis of a sodium chloride solution, sodium hypochlorite, which during certain phases of the operating cycle of the machine is introduced in metered amounts into the washing tub of the machine by means of a piston metering device. The sodium hypochlorite is dissolved in a relatively large amount of water introduced into the tub, the resulting solution being sprayed onto the dishes and the like for purposes of disinfection and final cleaning.

As the sodium hypochlorite has to be diluted in water, as already stated, it has to be generated in suitable amounts of a few grammes during each operating cycle of the electrochemical cell, in order to obtain in the washing tub a hypochlorite solution of sufficiently high concentration to achieve a satisfactory oxidizing effect for the final cleaning step. To this purpose the electrochemical cell is to be of a size inversely proportional to its output yield.

It is a known fact that in dish washers for domestic use it is of particular importance that their various components are dimensioned as small as possible, so that they can be accommodated in the limited space around the washing tub. On the other hand, the employ of a rather voluminous cell is required due to the fact that the yield of an electrochemical cell for generating sodium hypochlorite diminishes spectacularly as its temperature rises above ambient temperatures during the electrolysis.

This drawback could be overcome by the employ of suitable means for cooling the electrochemical cell, in which case, however, the construction of the dish washer would become unduly complicated. In any case, the solution of sodium hypochlorite in water is basically alkaline, as generally known, so that it cannot develop its full oxidizing effect on the goods to be cleaned.

A fundamental disadvantage of dish washers of this type resides in the fact that the sodium hypochlorite solution introduced into the tub contains sodium chloride, resulting in considerable corrosion problems, as generally known.

In addition, electrochemical cells of the type described are subject to the problem of their electrodes becoming incrusted in the course of successive electrolysis phases. Such incrustation has an adverse effect on the proper operation of the cell itself and thus on the machine incorporating it.

It is an object of the present invention to provide a dish washing machine incorporating an electrochemical cell of reduced dimensions, adapted to produce an oxidizing substance capable of developing an optimum effect on the goods to be washed even in small quantities, without adding any particular complications to the construction and operation of the dishwasher itself.

A further object of the invention is to provide a dishwasher incorporating an electrochemical cell of the type described, wherein the problems of incrustation and corrosion are practically eliminated.

In view of these and other objects, the invention provides a dishwashing machine comprising a washing tub adapted to be supplied with tap water through a water supply circuit, and further comprising an electrochemical cell adapted to be supplied with metered amounts of brine via a salt container connected to the water supply circuit through at least one solenoid valve or the like controlled by the programme unit of the dishwasher. According to the invention, a dishwasher of this type is characterized by the features in the characterizing part of claim 1.

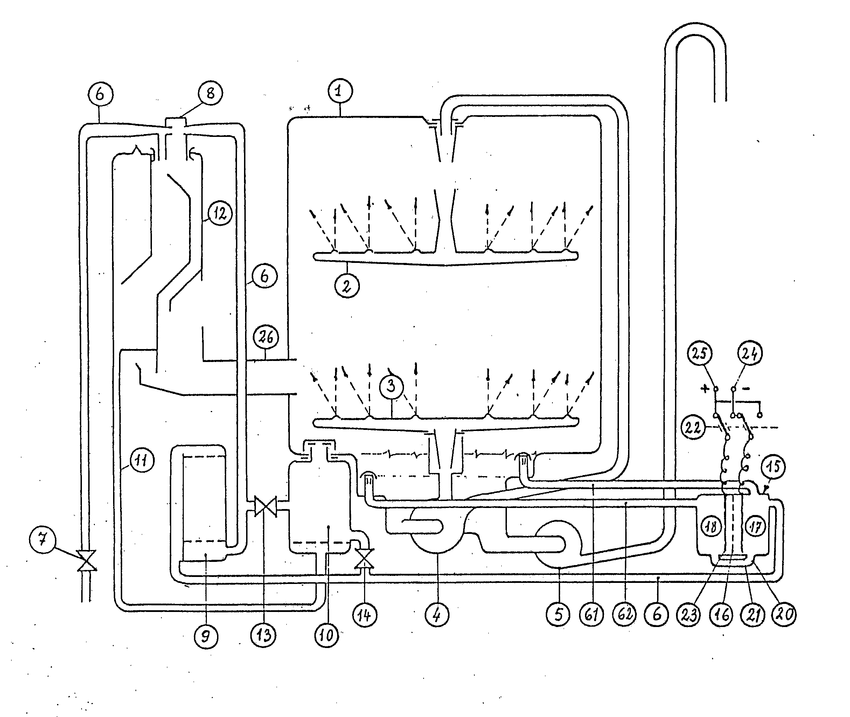

Further characteristics and advantages of the invention will become evident from the following description of a preferred embodiment when taken in conjunction with the accompanying drawing, the only figure of which shows a diagrammatic elevational view of a dishwashing machine in a preferred embodiment of the invention.

The dishwasher shown comprises a washing tub 1 in the interior of which there is mounted a plurality of rotatable sprayer arms 2, 3 supplied by a recirculation pump 4. A discharge pump 5 is provided for evacuating the washing liquid from tub 1. The two pumps, the rotatable sprayer arms and the associated connections are of the type as described in Italian Patent 1,050,958, filed on Sep. 24, 1975, on behalf of the present applicant. Tub 1 is adapted to be supplied with tap water via a water supply circuit 6 comprising, in series, a solenoid valve 7, an open air jet section 8, and a decalcifyer 9. The dishwasher is further provided with a salt container 10 adapted to be supplied with metered amounts of water via a conduit 11 connected to a metering receptacle 12. This receptacle as well as the free air jet section 8 are preferably designed in the manner described in Italian Utility Model Application 34,036 B/79, filed on Nov. 15, 1979, on behalf of the present applicant.

Salt container 10 has two outlets connected to water supply circuit 6 upstream and downstream, respectively, of decalcifyer 9, through associated solenoid valves 13 and 14, respectively. These solenoid valves as well as water supply solenoid valve 7 are controlled in a known manner by the programme unit of the machine (not shown).

Downstream of its connections with the salt container 10, water supply circuit 6 further includes an electrochemical cell 15. According to an important aspect of the invention, the electrochemical cell is of a per se known (See US—A—4229272) type adapted to produce gaseous chlorine by electrolysis of a sodium chloride solution. In particular, cell 15 comprises two electrode compartments 17, 18 separated from one another by a porous partition 16 or the like.

The electrodes 21 and 23 of electrochemical cell 15 are adapted to be connected to a direct current source having a pair of contact terminals 24 and 25 through a per se known two contact polarity inverter 22 controlled by the programme unit of the machine. Polarity inverter 22 is actuated periodically for inverting the polarity of electrodes 21 and 23 during a preselected phase of the operating cycle of the dishwasher. This switching operation may for instance take place repetitively during the initial period of the rinsing phase normally provided by the operating cycle of the machine, or may be carried out only once for each operating cycle.

The cathodic compartment, alternatively 17 or 18, depending on the polarity of the tension applied to electrodes 21 and 23, is adapted to generate hydrogen, while the anodic compartment is adapted to generate gaseous chlorine. Compartments 17 and 18 communicate with the interior of tub 1 through associated conduits 61 and 62, respectively, forming the terminal portions of water supply circuit 6.

Each conduit 61, 62 may for instance communicate with tub 1 at the level of a water collecting bowl provided therein as described in European Patent EP—A—0022911 on behalf of the present applicant. Conduits 61 and 62 preferably extend vertically into tub 1, with the outlet opening of conduit 61 being located at a higher level than that of conduit 62.

According to another aspect of the invention, the two electrode compartments 17 and 18 communicate with one another through an auxiliary conduit 20.

Finally, washing tub 1 communicates with the ambient atmosphere through a ventilating conduit 26, itself communicating in a per se known manner with an overflow arrangement provided in the interior of metering receptacle 12.

The following description is only concerned with the more significant phases of the operation of the dishwasher, always keeping in mind that the actuation times of the various functional components controlled by the programme unit may be readily established by those skilled in the art.

For introducing tap water into tub 1, solenoid valve 7 is opened, whereupon water starts to flow along water supply circuit 6 through solenoid valve 7 and free air jet section 8 and onwards through decalcifyer 9, wherein it is softened, into compartment 17 and, via auxiliary conduit 20, into compartment 18 of cell 15, from where it enters tub 1 via conduits 61 and 62. During any water supply phase, electrochemical cell 15 simply acts as an enlarged-diameter section of water supply circuit 6. Simultaneously with the above, a portion of the tap water is collected in known manner in metering receptacle 12. The regeneration of the ion exchange resins contained in decalcifyer 9 is carried out, for instance at the end of each operating cycle of the machine, by opening solenoid valve 13 alone. This permits the water collected in receptacle 12 to flow by gravity into salt container 10, displacing the brine contained therein, so that the latter flows through solenoid valve 13 to fill decalcifyer 9. During a predetermined phase of the operating cycle of the machine, preferably after the introduction of the water employed for the conventonal first rinsing of the dishes, solenoid 14 alone is opened for a determined period of time. In this case, the water previously collected, and thus metered, in receptacle 12 is permitted to flow by gravity into salt container 10, displacing the brine contained therein, so that the latter escapes through solenoid valve 14 to fill compartments 17 and 18 of cell 15. At the same time, the softened water contained within cell 15 is of course displaced to flow into tub 1 through conduits 61 and 62. Due to the different levels of the outlet openings of conduits 61 and 62, the brine estering compartment 17 finds its preferential flow path along auxiliary conduit 20 and conduit 62, ensuring in this manner that the brine equally fills both compartments of cell 15.

Preferably during the first rinsing phase, a DC tension is applied for a few minutes to contact terminals 24, 25, so that the electrochemical cell initiates the electrolysis of the sodium chloride solution contained therein.

In the position of polarity inverter 22 shown in the drawing, compartment 17 will generate hydrogen, which escapes therefrom towards tub 1 through conduit 61. At the same time, compartment 18 produces gaseous chlorine, which escapes therefrom towards tub 1 through conduit 62 without being accompanied by sodium chloride.

During the rinsing phase, the interior space of tub 1 is in a state of turbulence due to the action of revolving sprayer arms 2 and 3, so that the gaseous chlorine entering tub 1 is absorbed by the rinsing water and directly distributed on the sprayed surfaces of the dishes and the like to effect the desired cleaning thereof.

It is to be noted that the oxidizing effect of the chlorine, enhanced by the fact that an aqueous solution of chlorine is slightly acidic, is accompanied by the dissolution of an eventual veil of calcium carbonate on the glazed surfaces of the crockery. In view, moreover, of the relatively small quantity of water, by which the gaseous chlorine is absorbed, the latter may be introduced into the washing tub in a minimum amount to result in an optimum concentration. Thanks also to the inherent characteristics of the electrochemical cell 15 employed for generating gaseous chlorine, which permits doing without any particular cooling system, the electrochemical cell can have considerably reduced dimensions and requires only relatively small electric currents for its operation. Furthermore there is no need for any specific metering device for the introduction of the gaseous chlorine into the tub. This introduction rather takes place contemporaneously with the production of the gaseous chlorine, and without any sodium chloride being carried along, which would otherwise, as stated above, create serious corrosion problems within the washing tub.

After the dishes and the like have been subjected to the action of the chlorine, there follows, as already noted above, at least one further tap water supply and discharge phase, during which the recirculation pump 4 is deenergized. This phase is effective to displace the brine remaining within cell 15 with softened tap water, and to discharge it via the washing tub. As a consequence, the remaining brine does not substantially influence the traditional ultimate rinsing phase, during which any chlorine still present on the surfaces of the dishes and the like is forcefully diluted and subsequently discharged.

It is noted that the gaseous chlorine and the hydrogen are generated by cell 15 only during limited periods and in rather small amounts, so that these substances, should they inadvertently escape, do not in practice constitute any danger to the operator of the machine. This is because the chlorine as well as the hydrogen are immediately diluted within tub 1 in sufficient amounts of water and air, respectively, to safely exclude any problems with regard to explosivity and/or toxicity of these substances.

A further advantage of the dishwasher according to the invention is due to the fact that the polarity of the DC tension applied to the electrodes 21 and 23 of cell 15 is periodically inverted by polarity inverter 22. This implies that the two compartments 17 and 18 of cell 15 alternately operate as the anodic and cathodic compartments, respectively, during the electrolysis. This alternating flow of the electrolysis current automatically eliminates any tendency of incrustations to form on the electrodes 21 and 23.

This provision, in combination with the series connection of the electrochemical cell 15 within the water supply circuit of the machine, ensures periodic cleaning of the electrochemical cell itself, resulting in reliable operation over extended periods. From the above it is also evident that the dishwasher according to the invention does not require any additional solenoid valve in its water supply circuit, resulting in a simple construction and reliable operation of the entire machine.

The dishwasher described may of course be modified in various manners within the scope of the appended claims.

Thus the generation of the gaseous chlorine and its introduction into the washing tub may take place during any other phase of the operating cycle, during which the tub contains a certain minimum quantity of water.

In addition, the two compartments 17 and 18 of the electrochemical cell 15 may be completely separated from one another, in which case the auxiliary conduit 20 would be provided with a solenoid valve suitably controlled by the programme unit of the dishwashing machine.

**Claims**

1. Dishwasher comprising a washing tub (1) adapted to be supplied with tap water via a water supply circuit (6), and further comprising an electrochemical cell (15) adapted to be supplied with metered amounts of brine via a salt container (10) connected to said water supply circuit through at least one solenoid valve (13, 14) controlled by the programme unit of the dishwasher, characterized in that said electrochemical cell (15) is of the per se known type adapted to generate gaseous chlorine and is connected in series to said water supply circuit (6) downstream of its connection with the salt container (10), the electrochemical cell communicating with interior of the said tub (1) via at least one outlet conduit (61, 62) for said gaseous chlorine.

2. Dishwasher according to claim 1 characterised in that said electrochemical cell (15) comprises first and second electrode compartments (17, 18) for generating hydrogen and gaseous chlorine and being separated from each other by means of a porous partition, said electrode compartments being connected to each other via an auxiliary conduit (20).

3. Dishwasher according to claim 3, characterized in that said terminal conduit (61) of said first compartment (17) extends to a higher level within said tub (1) than does the terminal conduit (62) of said second compartment (18) of said electrochemical cell (15).

4. Dishwasher according to claim 1, characterized in that said electrodes (21, 23) of said electrochemical cell (15) are adapted to be connected to terminal contacts (24, 25) of a direct current source through a polarity inverter (22) controlled by the programme unit of the dishwasher for periodically inverting the connection to said terminal contacts.

**Patentansprüche**

1. Geschirrspülmaschine mit einem Spülraum (1), welcher über einen Wasserzuführungskreislauf (6) mit Leitungswasser versorgt werden kann, weiterhin mit einem elektrochemischen Element (15), welches über einen Salzbehälter (10), der mit dem Wasserzuführungskreislauf über wenigstens ein Magnetventil (13, 14), welches durch die Programmeinheit der Geschirrspülmaschine gesteuert ist, verbunden ist, mit einer abgemessenen Menge an Salzsole beaufschlagbar ist, dadurch gekennzeichnet, daß das elektrochemische Element (15) in an sich bekannter Weise ausgestaltet ist, um gasförmiges Chlor zu erzeugen und stromab seiner Verbindung mit dem Salzbehälter (10) in Serie mit dem Wasserzuführungskreislauf (6) in Verbindung steht, und mit dem Inneren des Spülraums (1) über wenigens eine Auslaßleitung (61, 62) für gasförmiges Chlor verbunden ist.

2. Geschirrspülmaschine nach Anspruch 1, dadurch gekennzeichnet, daß das elektrochemische Element (15) erste und zweite Elektrodenkammern (17, 18) zur Erzeugung von Wasserstoff und gasförmigem Chlor umfaßt, welche voneinander mittels einer porösen Trennwand getrennt sind, und daß die Elektrodenkammern untereinander über eine Hilfsleitung (20) verbunden sind.

3. Geschirrspülmaschine nach Anspruch 2, dadurch gekennzeichnet, daß die Auslaßleitung (61) der ersten Kammer (17) sich bis zu einem höheren Niveau im Inneren des Spülraums (1) erstreckt, als die Auslaßleitung (62) der zweiten Kammer (18) des elektrochemischen Elements (15).

4. Geschirrspülmaschine nach Anspruch 1, dadurch gekennzeichnet, daß die Elektroden (21, 23) des elektrochemischen Elements (15) mit Anschlüssen (24, 25) einer Gleichspannungsquelle über einen Polaritätswechselrichter (22) verbindbar sind, welcher durch die Programmeinheit der Geschirrspülmaschine gesteuert ist, um die Verbindung der Anschlüsse periodisch umzukehren.

**Revendications**

1. Machine à laver la vaisselle comprenant une cuve de lavage (1) adaptée pour être alimentée en eau du réseau par l'intermédiaire d'un circuit en eau (6), et comprenant en outre une cellule électrochimique (15) adaptée pour être alimentée avec des quantités dosées de saumure par l'intermédiaire d'un récipient de sel (10) relié audit circuit d'alimentation en eau au moyen d'au moins une électrovalve (13, 14) commandée par l'unité de programmation de la machine à laver la vaisselle, caractérisée en ce que ladite cellule électrochimique (15) est d'un type connu en soi, adapté pour produire du chlore gazeux, et est reliée en série audit circuit d'alimentation en eau (6) en aval de sa liaison avec le récipient de sel (10), la cellule électrochimique communiquant avec l'intérieur de ladite cuve (1) par l'intermédiaire d'au moins un conduit de sortie (61, 62) dudit chlore gazeux.

2. Machine à laver la vaisselle selon la revendication 1, caractérisée en ce que ladite cellule électrochimique (15) comprend des premier et second compartiments à électrodes (17, 18) pour produire de l'hydrogène et du chlore gazeux et séparés l'un de l'autre au moyen d'une paroi séparatrice poreuse, lesdits compartiments à électrodes étant reliés l'un avec l'autre par l'intermédiaire d'un conduit auxiliaire (20).

3. Machine à laver la vaisselle selon la revendication 3, caractérisée en ce que ledit conduit terminal (61) dudit premier compartiment (17) s'étend à l'intérieur de ladite cuve (1) à un niveau plus élevé que le conduit terminal (62) dudit second compartiment (18) de ladite cellule électrochimique (15).

4. Machine à laver la vaisselle selon la revendication 1, caractérisée en ce que lesdites électrodes (21, 23) de ladite cellule électrochimique (15) sont adaptées pour être reliées à des contacts terminaux (24, 25) d'une source de courant continu par l'intermédiaire d'un inverseur de polarité (22) commandé par l'unité de programmation de la machine à laver la vaisselle pour inverser périodiquement la connexion avec lesdits contacts terminaux.